# EUROPEAN PATENT SPECIFICATION

(11) **EP 1 386 937 B1**
(45) Date of publication and mention of the grant of the patent: **05.10.2011**
(21) Application number: 03253601.3
(22) Date of filing: 06.06.2003
(51) Int. Cl.: C08G 63/199, C08G 63/82, C08G 63/78

(54) **Method for preparing poly(cyclohexane-1, 4-dicarboxylate)s**
Verfahren zur Herstellung von Polycyclohexan-1,4-dicarboxylaten
Procédé pour la préparation de poly(cyclohexane-1,4-dicarboxylate)s

(30) Priority: 12.06.2002 IT MI20021293
(43) Date of publication of application: 04.02.2004
(73) Proprietor: SABIC Innovative Plastics IP B.V., 4612 PX Bergen op Zoom (NL)
(72) Inventor: Brunelle, Daniel Joseph, Burnt Hills, New York 12027 (US); Celli, Annamaria, Forlt 47100 (IT); Fiorini, Maurizio, Anzola Ehilia (Bo) 40011 (IT); Berti, Corrado, Lugo (Ravenna) 48022 (IT); Collona, Martino, Bolgna 40199 (IT); Marchese, Paola, Bologna 40123 (IT); Marianucci, Elisabetta, Bologna 40127 (IT); Messori, Massimo, Modena 41100 (IT); Sisti, Laura, Bologna 40067 (IT); Pilati, Francesco, Bologna 40127 (IT)
(74) Representative: Müller, Frank Peter

(56) References cited:
- EP-A- 0 537 672
- EP-A1- 1 598 385
- WO-A-02/31020
- PATENT ABSTRACTS OF JAPAN vol. 2000, no. 13, 5 February 2001 (2001-02-05) & JP 2000 290356 A (KURARAY CO LTD), 17 October 2000 (2000-10-17)

## Description

This invention relates to the preparation of polyesters, and more particularly to the preparation of poly(1,4-cyclohexanedicarboxylate)s.

Poly(1,4-cyclohexanedicarboxylate)s such as poly(1,4-cyclohexanedimethylene-1,4-cyclohexanedicarboxylate), hereinafter sometimes designated "PCCD" for brevity, are known polyesters; reference is made, for example, to U.S. Patent No. 2,891,930. PCCD is characterized by such advantageous properties as crystallinity and resistance to weathering under conditions of exposure to ultraviolet radiation. These properties have increased interest in commercialization in recent years.

Commercially employed methods of producing PCCD utilize as reactants at least one relatively non-volatile diol, most often 1,4-cyclohexanedimethanol (hereinafter "CHDM") and at least one dialkyl 1,4-cyclohexanedicarboxylate, most often dimethyl 1,4-cyclohexanedicarboxylate (hereinafter "DMCD"). Polymer formation proceeds with the initial formation of oligomers containing ester and hydroxy end-groups, which react together to build molecular weight. The intermediate mixtures of diester, diol and oligomers are miscible in all proportions, forming a clear melt at an early stage of the polymerization reaction. U.S. Patent No. 6,084,055 is an example of such transesterification procedures.

The DMCD used in this process is ordinarily obtained by reduction of dimethyl terephthalate. Its production, therefore, requires two steps: esterification of terephthalic acid and reduction to form DMCD. It would be desirable to employ cyclohexane-1,4-dicarboxylic acid (hereinafter "CHDA"), which can be obtained in one step by reduction of terephthalic acid, as a reactant in the preparation of PCCD.

The employment of CHDA is not as easy, however, with relatively non-volatile diols such as CHDM as with more volatile ones such as ethylene glycol and 1,4-butanediol. Such volatile diols can be used in excess, driving the esterification to completion, and the excess can then be removed by distillation. Any excess of relatively non-volatile CHDM will, by contrast, remain in the polyester as a contaminant, rendering the polyester useless or at least materially degrading its properties. Another common issue with employing non-volatile CHDM in excess is that the molecular weight of the resulting polyester is limited. Moreover, mixtures of CHDM, CHDA and polyester oligomers are not uniformly miscible since CHDA is not highly soluble in CHDM.

Thus, those attempting to prepare PCCD from CHDM and CHDA find themselves on the horns of a dilemma. If they attempt to employ a large excess of CHDM to maximize the molecular weight of the product, they obtain a polyester that may be essentially useless, for example owing to its contamination with excess CHDM. If, on the other hand, they attempt to employ the reagents in essentially or nearly equimolar proportions, molecular weight control may be a problem since production of high molecular weight polyester requires very close and consistent stoichiometry matching of reactants.

Various factors can affect the crystallinity of PCCD and similar polyesters. One of the major ones is the cis/trans isomer ratio of the diester moiety, especially the acid-derived moieties therein. CHDM and CHDA exist in cis and trans isomeric forms, and the degree of crystallinity of the polymer decreases significantly with an increase in proportion of cis isomer content. For the most part, the reagents DMCD and CHDA have a trans isomer level of 99% by weight or greater. (CHDM is about 70% trans but no isomerization of the diol moieties occurs during polymerization.) The proportion of trans isomer in the polyester itself is lower, in one embodiment about 87% or greater for optimum crystallinity.

Therefore, a method of making high molecular weight, highly crystalline poly(1,4-cyclohexanedicarboxylate)s in essentially contaminant-free form is desirable. In a particular embodiment a method of making high molecular weight, highly crystalline poly(1,4-cyclohexanedicarboxylate)s substantially free from cyclohexane-1,4-dicarboxylic acids is desirable. Such a method is provided by the present invention.

### SUMMARY OF THE INVENTION

The present invention is based on the discovery that mixtures of diols comprising CHDM with CHDA and oligomers thereof, may be employed to make high molecular weight polyesters under suitable conditions wherein, as the polymerization proceeds and CHDA becomes incorporated into the polymer, a clear melt is formed. This can be accomplished without resorting to temperatures so high as to cause conversion in the monomers or polymer product of the trans to the cis isomer.

The invention, therefore, is a method for preparing a poly(1,4-cyclohexanedicarboxylate) which consists of bringing into mutual contact, in the presence of an esterification catalyst, reagents consisting of at least one relatively non-volatile diol and cyclohexane-1,4-dicarboxylic acid, the molar ratio of total diol to acid being in the range of 0.97-1.02:1, said contact taking place in the melt in two steps at two different temperatures, the temperature of the first step being in the range of about 220-230°C and the maximum second temperature being 260°C.

### DETAILED DESCRIPTION

The polyesters produced by the method of this invention are poly(cyclohexane-1,4-dicarboxylate)s, characterized by the presence of structural units of the formula 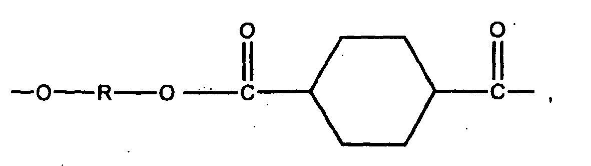 wherein R is an alkyl radical derived from a relatively non-volatile diol HO-R-OH. It is most often a homopolyester, but as noted hereinafter, it may also be a copolyester.

CHDA as employed in the method of this invention is a known compound. In the invention, it undergoes an esterification reaction with at least one relatively non-volatile diol. Within the context of the present invention "relatively non-volatile" diols are those having a boiling point (at atmospheric pressure) in one embodiment at or above about 210°C, in another embodiment above about 220°C, in another embodiment above about 240°C, and in still another embodiment above about 260°C. In particular embodiments the relatively non-volatile diol or mixture of relatively non-volatile diols has a boiling point at atmospheric pressure of above about 250°C. In another particular embodiment the relatively non-volatile diol or mixture of relatively non-volatile diols has a boiling point at atmospheric pressure of greater than the highest temperature at which the esterification reaction is performed. Suitable diols are known in the art and include, but are not limited to, CHDM, benzenedimethanol, adamantanediol, and tetramethylcyclobutanediol. For the sake of convenience, the invention will frequently be described herein with reference to CHDM as the diol; however, it should be understood that other relatively non-volatile diols may be substituted therefor as appropriate.

The transesterification reaction is conducted in the presence of a suitable catalyst. Suitable catalysts for transesterification are well-known in the art and include organometallic compounds containing at least one metal selected from the group consisting of titanium, zirconium, tin, antimony, germanium, gallium, zinc, iron, manganese, cobalt, hafnium, vanadium, iridium, lanthanum, cerium, lithium, calcium, magnesium, barium, nickel, and aluminum. Only one kind of the above-listed catalysts may be employed, or two or more kinds thereof may be suitably mixed and employed. In various embodiments the catalyst is a tetraalkyl titanate such as tetraisopropyl titanate, tetra-n-butyltitanate, and tetrakis(2-ethylhexyl) orthotitanate. In other embodiments suitable catalysts include organotin compounds such as dibutyltin oxide, stannous 2-ethylhexanoate and stannic oxide, and antimony compounds such as antimony(III) oxide and mixtures thereof with calcium acetate. Catalyst amounts are those effective for esterification. Catalyst amounts are in some embodiments in the range of about 20-500 ppm metal, in other embodiments in the range of about 50-320 ppm metal, in still other embodiments in the range of about 100-250 ppm metal, and in still other embodiments in the range of about 100-200 ppm metal based on theoretical polymer yield. All of the catalyst may be present at the beginning of the reaction. In other embodiments it may be advantageous to introduce the catalyst in stages, with up to about 50% thereof being present at the initiation of the transesterification reaction and the balance being added subsequently, most often after about 30-50% of the total reaction time. The catalyst may be introduced into the reaction mixture by any means known in the art. Often it is convenient to add the catalyst either neat or as a solution in an inert solvent.

Solvents and diluents may be used in the polymerization reaction but are not necessary. In a particular embodiment of the invention solvents and diluents are not present in the polymerization reaction. In some embodiments of the invention subatmospheric reaction pressures may be employed.

In various embodiments of the invention the molar ratio of total diol to acid in the esterification reaction mixture is in one embodiment in the range of about 0.97-1.02:1; in another embodiment in the range of about 0.97-1.01:1; and in another embodiment in the range of about 1.0-1.01:1. The term "total diol" is employed by reason of the possibility of using a mixture of relatively non-volatile diols. In a particular embodiment the molar ratio of total diol to acid in the esterification reaction mixture is in the range of 1.0-1.005:1.

The details of the esterification reaction, other than molar ratio of diol to acid and maximum temperature, are not critical. In the present invention the reaction is conducted in two steps. The first step is conducted in the melt at a temperature of at least about 220°C, since it has been discovered that while mixtures of CHDM and CHDA are not all miscible at lower temperatures, they are miscible at 220°C and above, making such temperatures beneficial for esterification. In a particular embodiment the temperature for the first step is in the range of about 220-230°C and the reaction is conducted, at least initially, at atmospheric pressure.

The second or molecular weight building step of the esterification reaction is in one embodiment at a maximum temperature of about 260°C, and in another embodiment at a maximum temperature of about 250°C. Subatmospheric pressures, in various embodiments in the range of about 0.1-10.0 mbar, may be employed for at least part of this second step. It is also contemplated to begin the second step at a lower temperature and increase the temperature either gradually or stepwise to the maximum value.

Different embodiments of the invention, based on the state of the reaction mixture during the molecular weight building step, are possible. In are embodiments, said step is conducted in the melt at a temperature in the range in one embodiment of 230-260°C, and in another embodiment of 230-250°C.

The poly(1,4-cyclohexanedicarboxylate)s prepared in various embodiments of the invention are characterized by high weight average molecular weights (Mw), in one embodiment above 30,000, in another embodiment above 40,000, in another embodiment above 50,000, and in another embodiment above 60,000, as determined by gel permeation chromatography relative to polystyrene standards, and using refractive index detection. The poly(1,4-cyclohexanedicarboxylate)s are also characterized by relatively high crystallization temperatures (Tc), in one embodiment above 150° and in another embodiment above 160°C; and relatively high crystalline melting temperatures (Tm), in one embodiment above 210°C; and high trans isomer content, in one embodiment at least about 84%, in another embodiment at least about 85%, in another embodiment at least about 87%, in another embodiment at least about 90%, in another embodiment in a range of between about 84% and about 92%, in another embodiment in a range of between about 85% and about 91%, and in another embodiment in a range of between about 86% and about 90%. In other embodiments trans isomer content in the poly(1,4-cyclohexanedicarboxylate)s is greater than about 90%, in another embodiment in a range of between about 90% and about 95%, and in still another embodiment in a range of between about 91% and about 94%. In the determination of Tm by differential scanning calorimetry (DSC), it is often found that two different values are obtained in successive trials, the second value being higher than the first, and the above-listed values are for the first heat. It is generally preferred for the Mw, Tc and Tm values all to be as high as possible. In some embodiments it is observed that the polymer may exhibit two Tm values during the second heat.

The poly(1,4-cyclohexanedicarboxylate)s prepared in various embodiments of the invention are also characterized by having a uniquely high concentration of carboxylic acid end-groups compared to poly(1,4-cyclohexanedicarboxylate)s made in the prior art. More particularly, poly(1,4-cyclohexanedicarboxylate)s of the present invention have carboxylic acid end-groups arising from the use of CHDA as a monomer. In some embodiments the concentration of carboxylic acid end-groups on polymers of the invention is in a range of between about 200 ppm and about 8000 ppm, in other embodiments in a range of between about 200 ppm and about in 5000 ppm, in other embodiments in a range of between about 300 ppm and about 4000 ppm, and in still other embodiments in a range of between about 400 ppm and about 4000 ppm. In contrast poly(1,4-cyclohexanedicarboxylate)s made by previously known methods have carboxylic ester groups arising from use of DMCD as a monomer. In general such polymers made by previously known methods using DMCD as a monomer have a carboxylic acid end-group concentration of less than 200 ppm, wherein the acid end-groups may result from processes such as adventitious hydrolysis of ester end-groups or use of partially hydrolyzed starting monomer. Carboxylic acid end-groups on the polymers of the present invention may have beneficial property effects, including but not limited to increased tendency of the polymer to crystallize under certain circumstances.

Without further elaboration, it is believed that one skilled in the art can, using the description herein, utilize the present invention to its fullest extent. The following examples are included to provide additional guidance to those skilled in the art in practicing the claimed invention. The examples provided are merely representative of the work that contributes to the teaching of the present application. Accordingly, these examples are not intended to limit the invention, as defined in the appended claims, in any manner.

### EXAMPLE 1

In a series of catalyst screening experiments, a mixture of equimolar amounts of CHDA and CHDM was charged to a glass tube 15 x 1.5 centimeters (cm), and catalyst was added, dissolved in toluene in runs 2-9 and in water in run 10, in the amount of 200 ppm of metal based on theoretical polymer yield. The catalyst solvent was removed under vacuum and the tube was heated in a silicone oil bath to 200°C for 30 minutes. The temperature was then raised to 230°C and the pressure in the tube was reduced to 2 mbar over about 7 minutes. This temperature was maintained for 30 minutes, after which the polymer was recovered. The results are given in Table I.

**TABLE I**

| Run No. | Catalyst | Mw | Mn |
|---|---|---|---|
| | | | |
| 1 | None | 3,500 | 1,400 |
| 2 | Tetrakis(2-ethylhexyl) orthotitanate | 3,900 | 1,700 |
| 3 | Tetra-n-butyl titanate | 4,400 | 1,900 |
| 4 | Tetra-n-propyl titanate | 4,000 | 1,800 |
| 5 | Di-n-butyltin oxide | 3,900 | 1,500 |
| 6 | Stannous 2-ethylhexanoate | 4,800 | 2,100 |
| 7 | Butyltin hydroxide-oxide | 4,000 | 1,700 |
| 8 | Zirconium(IV) 2,4-pentanedionate | 3,900 | 1,600 |
| 9 | Antimony(III) oxide | 5,500 | 2,300 |
| 10 | Antimony(III) oxide/calcium acetate, 1:1 molar | 5,300 | 2,100 |

It is evident that each of the evaluated catalyst materials had some catalytic effect. However, the product of run 10 was gray in color.

### EXAMPLE 2

In a series of runs, a 250 milliliter (ml) round-bottomed, wide-neck glass reactor was charged with about 20 grams (g) of CHDM and predetermined amounts of CHDA and tetra-n-butyl titanate, the latter in the form of a 0.1 N solution in toluene. The reactor was closed with a flat flange equipped with a mechanical stirrer and a torque meter. The lid was heated with a heating band to 100°C and the system was connected to a liquid nitrogen-cooled condenser and immersed in an oil bath maintained at 220°C. This temperature was maintained without stirring for the first step of the esterification reaction which was performed at atmospheric pressure. After 90 minutes, the temperature was increased to a higher value, the stirrer was started and the pressure was reduced to about 0.2-1.0 mbar over about 15 minutes, after which heating was continued for a total heating time of 60 minutes. In runs where higher temperatures were employed, each 10° increase in temperature was maintained for 60 minutes. The product PCCD was then recovered from the reactor. Each sample was analyzed for Mw, and for Tm and Tc in a first heating and cooling DSC cycle, followed by a second Tm cycle. The DSC measurements were performed under nitrogen by heating through a first cycle from 50°C to 250°C at a heating rate of 20°C/minute, then holding at 250°C for 1 minute, then cooling at 20°C/minute to 50°C to measure Tc; then holding at 50°C for 1 minute; and then heating through a second cycle from 50°C to 250°C at a heating rate of 20°C/minute. Values for % trans isomer were determined by ¹³C nuclear magnetic resonance spectroscopy of carbonyl groups. The relevant parameters and results are given in Table II.

**TABLE II**

| Run | CHDM/CHDA | Catalyst, | Final | Trans | Tc, | Tm, | Mw |
|---|---|---|---|---|---|---|---|
| | molar ratio | ppm | temp., | isomer, | °C | °C, 2nd heat | |
| | | metal | °C | % | | | |
| 11 | 1.000 | 250.0 | 260 | 85 | 160.3 | 203.2; 214.5 | 27,400 |
| 12 | 1.005 | 175.0 | 250 | 88 | 168.5 | 214.9; 218.6 | 50,200 |
| 13 | 1.013 | 175.0 | 250 | 88 | 169.1 | 212.3; 218.7 | 50,000 |
| 14 | 1.005 | 175.0 | 250 | 89 | 167.5 | 214.6 | 61,200 |
| 15 | 1.010 | 250.0 | 260 | 86 | 163.3 | 214.5 | 55,500 |
| 16 | 1.000 | 100.0 | 240 | 91 | 167.0 | 210.5; 218.9 | 43,400 |
| 17 | 1.005 | 48.9 | 250 | 87 | 171.3 | 206.2; 214.5 | 29,600 |
| 18 | 1.005 | 175.0 | 250 | 88 | 160.3 | 207.5; 216.9 | 49,100 |
| 19 | 1.005 | 175.0 | 267 | 86 | 153.3 | 210.7 | 68,300 |
| 20 | 1.005 | 175.0 | 250 | 88 | 167.5 | 213.7 | 60,000 |
| 21 | 1.005 | 301.1 | 250 | 91 | 165.3 | 216.1 | 70,400 |
| 22 | 1.010 | 100.0 | 260 | 86 | 152.1 | 209.2; 215.9 | 67,100 |
| 23 | 1.000 | 100.0 | 260 | 86 | 158.3 | 211.5 | 80,300 |
| 24 | 0.997 | 175.0 | 250 | 87 | 147.3 | 201.6; 216.7 | 32,400 |
| 25 | 1.005 | 175.0 | 250 | 90 | 163.3 | 215.1 | 66,700. |
| 26 | 1.005 | 175.0 | 250 | 90 | 162.3 | 215.1; 219.8 | 53,500 |
| 27 | 1.005 | 175.0 | 250 | 87 | 164.6 | 213.4; 218.3 | 63,300 |
| 28 | 1.005 | 175.0 | 250 | 85 | 170.2 | 216.3; 221.9 | 54,700 |
| 29 | 1.005 | 175.0 | 250 | 85 | 171.5 | 216.7; 226.5 | 46,800 |
| 30 | 1.005 | 175.0 | 250 | 88 | 165.1 | 215.3 | 63,700 |
| 31 | 1.005 | 175.0 | 250 | 85 | 162.7 | 210.8; 221.7 | 44,700 |

From the results in Table II, it will be apparent that the trends toward high trans isomer content, high crystallization and melting temperatures and high molecular weight are particularly evident in the runs conducted at a maximum temperature of 260°C and especially 250°C. Moreover, a comparison of run 24 with the other runs shows the advantages of employing a diol:acid molar ratio of at least 1.0:1.

### Reference EXAMPLE 1

The procedure of Example 2 was repeated, employing a reagent molar ratio of 1:1 CHDA:CHDM and a catalyst content of 175 ppm metal. In addition, ethylene glycol (EG) was incorporated into the reaction mixture at two different levels based on total diol. The temperature profile was 220°C (atmospheric pressure) for 90 minutes, followed by applying vacuum and maintaining the temperature at 230°C for 30 minutes, 240°C for 60 minutes and 250°C for 60 minutes. The results are given in Table III. The value for Tm was determined from the second DSC heating cycle.

**TABLE III**

| Run | EG in | EG in | Trans | Tm, | Tc, | Mw |
|---|---|---|---|---|---|---|
| | reactants, mole | product, | isomer, | °C | °C | |
| | % | mole % | % | | | |
| 32 | 2.5 | 1.5 | 88 | 214.5 | 158.2 | 81,300 |
| 33 | 5.0 | 2.4 | 89 | 214.9 | 160.9 | 93,800 |

By comparing Tables II and III, it can be seen that runs 32 and 33 which employed ethylene glycol afforded PCCD with higher molecular weight than runs 11-31. Moreover, the levels of trans isomer in runs 32 and 33 were higher than in many of runs 11-31.

### Reference EXAMPLE 2

A PCCD prepolymer was prepared as described in Example 2, employing a 1.005:1 molar ratio of CHDM to CHDA and 175 ppm of tetra-n-butyl titanate. The reaction was conducted at atmospheric pressure and 220°C for 90 minutes at atmospheric pressure without stirring, after which the pressure was decreased to about 0.2-1.0 mbar over about 15 minutes and the temperature was increased to 230°C, where it was maintained for 40 minutes.

The prepolymer (5-10 g) was ground to a fine powder and charged to a cylindrical glass reactor of about 30 millimeter (mm) internal diameter, fitted with a glass frit and thermocouple and having a glass sleeve for gas passage so that the gas was heated to the same temperature as the oil bath. Dry nitrogen was passed at a flow rate of about 1-2 1/min through the sleeve, into the reactor and through the frit, thus contacting the prepolymer. The reactor was immersed in an oil bath maintained at 210°C (polymerization temperature of 206°C), with removal and analysis of samples at various times. Each sample was analyzed for Mw and for Tm and Tc in a first heating and cooling DSC cycle, followed by a second heating cycle to redetermine Tm. The results are given in Table IV.

**TABLE IV**

| Time, hr | Mw | Trans | Tm, °C | Tc, °C | Tm, °C |
|---|---|---|---|---|---|
| | | isomer, % | 1st cycle | | 2nd cycle |
| 0 | 15,200 | 93 | 226 | 182.3 | 218.5, |
| | | | | | 232.7 |
| 1 | 33,100 | 93 | 240 | 170.6 | 220.5, |
| | | | | | 231.3 |
| 2 | 47,200 | 93 | 247 | 165.3 | 220.3, |
| | | | | | 231.2 |
| 3 | 53,300 | 93 | 248 | 159.9 | 220, |
| | | | | | 230.1 |
| 4 | 59,200 | 93 | 249 | 157.3 | 220.7, |
| | | | | | 229.4 |
| 5 | 62,300 | 93 | 249 | 155.3 | 220.7, |
| | | | | | 228.1 |
| 5.3 | 63,900 | 93 | 249 | 155.9 | 220.7, |
| | | | | | 228.7 |

It is apparent from Table IV that no isomerization took place during solid state polymerization. Molecular weight, Tm and Tc increase were significant for about the first 3 hours, after which they slowed to an approximately asymptotic progression.

A similar procedure was performed at 220°C (polymerization temperature 216°C). A polymer with a slightly higher weight average molecular weight was obtained.

### Reference EXANPLE 3

The procedure of Example 4 was repeated with the addition of EG in the amount of 5 mole percent of total diol. The resulting polymer contained 2.9 mole percent EG units, and the other properties of various samples removed during polymerization are shown in Table V. The value for Tm was determined from the second DSC heating cycle.

**TABLE V**

| Time, hr | Mw | Trans | Tc, °C | Tm, °C |
|---|---|---|---|---|
| | | isomer, % | | |
| | | | | |
| 0 | 20,900 | 93 | -- | -- |
| 1 | 37,300 | 93 | 159.5 | 207.3, |
| | | | | 217.7 |
| 2 | 51,000 | 93 | 151.1 | 207.7, |
| | | | | 217.5 |
| 4 | 64,500 | 92 | 145.5 | 207.7, |
| | | | | 216.9 |
| 12 | 77,300 | 92 | 134.3 | 205.7, |
| | | | | 214.1 |

### EXAMPLE 3

The carboxylic acid end-group concentrations of polymers made in embodiments of the present invention were analyzed by derivatization with 1,2-phenylene phosphorochloridite and analysis by ³¹P nuclear magnetic resonance spectroscopy. For comparison two samples of PCCD (PCCD-1 and PCCD-2; synthesized using DMCD using methods in U.S. Patent No. 6,084,055) were analyzed by the same method. The analytical results are shown in Table VI.

**TABLE VI**

| Sample | Mw | COOH (ppm) | OH (ppm) |
|---|---|---|---|
| | | | |
| PCCD-1 | 75,200 | 100 | 706 |
| PCCD-2 | 76,600 | 79 | 1068 |
| | | | |
| Run 34 | 67,100 | 3856 | 68 |
| Run 35 | 66,700 | 569 | 1162 |
| Run 36 | 55,500 | 3301 | 371 |

It is apparent that the poly(1,4-cyclohexanedicarboxylate)s made by methods of the present invention have higher carboxylic acid end-group concentration than similar polymers made by methods of the prior art.

## Claims

1. A method for preparing a poly(1,4-cyclohexane-dicarboxylate) having a trans isomer content of at least 84% determined by ¹³C nuclear magnetic resonance spectroscopy of carbonyl groups which consists of bringing into mutual contact, in the presence of an esterification catalyst, reagents consisting of at least one relatively non-volatile diol having a boiling point at or above 210°C at atmospheric pressure and cyclohexane-1,4-dicarboxylic acid, the molar ratio of total diol to acid being in the range of 0.97-1.02:1, said contact taking place in the melt in two steps at two different temperatures, the temperature of the first step being in the range of about 220-2230°C and the maximum second temperature being 260°C.

2. The method according to claim 1 wherein the relatively non-volatile diol is 1,4-cyclohexanedimethanol.

3. The method according to claim 1 wherein the catalyst comprises at least one organometallic compound containing at least one metal selected from the group consisting of titanium, zirconium, tin, antimony, germanium, gallium, zinc, iron, manganese, cobalt, hafnium, vanadium, iridium, lanthanum, cerium, lithium, calcium, magnesium, barium, nickel, and aluminum.

4. The method according to claim 3 wherein the catalyst is a tetraalkyl titanate.

5. The method according to claim 1 wherein the amount of esterification catalyst is in the range of 20-500 ppm based on theoretical polymer yield.

6. The method of claim 1, wherein the catalyst is a tetraalkyl titanate, the molar ratio of total diol to acid is in the range of 1.0-1.005:1, and the maximum second temperature being 250°C.

## Patentansprüche

1. Verfahren zur Herstellung eines Poly(1,4-cyclohexandicarboxylats) mit einem trans-Isomer-Gehalt von mindestens 84 %, bestimmt durch ¹³C-kernmagnetische Resonanzspektroskopie von Carbonylgruppen, welches darin besteht, Reagenzien bestehend aus mindestens einem relativ nicht flüchtigen Diol mit einem Siedepunkt bei oder über 210 °C bei Atmosphärendruck und 1,4-Cyclohexandicarboxylsäure in der Gegenwart eines Veresterungskatalysators in gegenseitigen Kontakt zu bringen, wobei das Molverhältnis von Gesamtdiol zu Säure im Bereich von 0,97-1,02:1 liegt, wobei der Kontakt in der Schmelze in zwei Schritten bei zwei verschiedenen Temperaturen erfolgt, wobei die Temperatur des ersten Schritts im Bereich von etwa 220-230 °C liegt und die maximale zweite Temperatur 260 °C beträgt.

2. Verfahren nach Anspruch 1, wobei das relativ nicht flüchtige Diol 1,4-Cyclohexandimethanol ist.

3. Verfahren nach Anspruch 1, wobei der Katalysator mindestens eine organometallische Verbindung umfasst, enthaltend mindestens ein Metall ausgewählt aus der Gruppe bestehend aus Titan, Zirkonium, Zinn, Antimon, Germanium, Gallium, Zink, Eisen, Mangan, Kobalt, Hafnium, Vanadium, Iridium, Lanthan, Cer, Lithium, Calcium, Magnesium, Barium, Nickel und Aluminium.

4. Verfahren nach Anspruch 3, wobei der Katalysator ein Tetraalkyltitanat ist.

5. Verfahren nach Anspruch 1, wobei die Menge an Veresterungskatalysator im Bereich von 20-500 ppm, bezogen auf die theoretische Polymerausbeute, liegt.

6. Verfahren nach Anspruch 1, wobei der Katalsysator ein Tetraalkyltitanat ist, das Molverhältnis von Gesamtdiol zu Säure im Bereich von 1,0-1,005:1 liegt und die maximale zweite Temperatur 250 °C beträgt.

## Revendications

1. Procédé pour la fabrication d'un poly(1,4-cyclohexane dicarboxylate) ayant une teneur de l'isomère trans d'au moins 84 %, déterminée par la résonance nucléaire magnétique-¹³C de groupes carbonyle, qui consiste à mettre en contact mutuel, en presence d'un catalyseur d'estérification, des réactifs consistant en au moins un diol relativement non volatile ayant un point d'ébullition au voisinage de ou supérieure à 210 °C à pression atmosphérique et l'acide 1,4-cyclohexane dicarboxylique, le rapport molaire de diol total à l'acide étant dans la gamme de 0,97-1,02:1, ledit contact étant mis en oeuvre dans la fonte en deux étapes à deux températures différentes, la température de la première étape étant dans la gamme d'environs 220-230 °C et la deuxième température maximale étant 260 °C.

2. Procédé selon la revendication 1, le diol relativement non volatile est le 1,4-cyclohexane diméthanol.

3. Procédé selon la revendication 1, dans lequel le catalyseur comprend au moins un composé organométallique contentant au moins un métal sélectionné parmi le groupe consistant en le titane, le zirconium, l'étain, l'antimoine, le germanium, le gallium, le zinc, le fer, le manganèse, le cobalt, l'hafnium, le vanadium, l'iridium, le lanthanum, le cérium, le lithium, le calcium, le magnésium, le baryum, le nickel et l'aluminium.

4. Procédé selon la revendication 3, dans lequel le catalyseur est un titanate de tétraalkyle.

5. Procédé selon la revendication 1, dans lequel la quantité de catalyseur d'estérification est dans la gamme de 20-500 ppm, en relation au rendement théorétique de polymère.

6. Procédé selon la revendication 1, dans lequel le catalyseur est un titanate de tétraalkyle, le rapport molaire de diol total l'à l'acide est dans la gamme de 1,0-1,005:1 et la deuxième température maximale est 250 °C.
